Europäisches Patentamt

European Patent Office

Office européen des brevets

(1) Publication number: **0 130 738**
**B1**

## EUROPEAN PATENT SPECIFICATION

(45) Date of publication of patent specification: **04.10.89**

(51) Int. Cl.⁴: **G 01 C 9/28**

(21) Application number: **84304171.6**

(22) Date of filing: **20.06.84**

(54) Electronic levelling device.

(30) Priority: **22.06.83 AU 9947/83**

(43) Date of publication of application:
**09.01.85 Bulletin 85/02**

(45) Publication of the grant of the patent:
**04.10.89 Bulletin 89/40**

(84) Designated Contracting States:
**DE FR GB SE**

(56) References cited:
**AU-A- 490 836**
**US-A-2 789 260**
**US-A-4 182 046**

(73) Proprietor: **EUREKA DEVELOPMENTS LIMITED**
**16th Floor Stock Exchange House 351 Collins Street**
**Melbourne, Victoria 3000 (AU)**

(72) Inventor: **Gooley, Cornelius Leonard**
**63 Staunton Road**
**Glen Iris, Victoria 3146 (AU)**

(74) Representative: **Rooney, Paul Blaise et al**
**D.Young & Co. 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to an orientation indicating apparatus useful for indicating the orientation of spirit levels, survey sighting apparatus or any member whose orientation is desired.

Known spirit levels used in the building industry to test the orientation or level of structural and other members include a liquid charged tube with an air or gas bubble contained therein. The tube is generally made of glass or transparent plastics material. The bubble occupies a central portion in the tube and may be flanked by spaced equidistant reference lines. When the tube and hence the levelling instrument is in the level condition direct observation by an operator is necessary to conclude a measurement. There are instances in which direct visual observation is impossible or difficult.

For improved measurement the tube may be charged with a liquid having particular sensitivity to movement, and the bubble may be elongated to further enhance the sensitivity to movement. Such a liquid may be unstable with ambient temperature variations, and the bubble may locate within a series of graduations marked on the surface of the tube when in the level condition. Direct visual observation by the operator may, under these conditions give an inaccurate level reading.

US—A—4,182,046 discloses an orientation indicating apparatus including a liquid charged chamber having a bubble movable in the chamber as the orientation of the chamber is changed. Two photodiodes illuminate the bubble laterally from one side thereof and their radiation which either passes transversely through the bubble or transversely to its line of movement is picked up by two detectors mounted on the opposite side of the bubble and chamber to the photodiodes. The radiation signals received by the detectors are compared to determine the orientation of the chamber. This location of the photodiodes and detectors laterally or transversely of the bubble reduces the sensitivity of the apparatus, because of the different angles of radiation received by the detectors depending upon whether or not the radiation passes through or alongside the bubble, and reduces the range of orientation positions detectable.

AU—A—490836 discloses an orientation indicating apparatus in which two light emitting diodes may be arranged one at each of opposite ends of the chamber and bubble so that light is deflected laterally from both ends edges of the bubble. Two detecting means, of unspecified position, may be provided to provide a net or sum total evaluation of light intensity received to determine when maximum intensity of light is impinging on the two detecting means. Thus the signals from the two light emitting diodes are not compared but are added only and hence this apparatus cannot determine direction and magnitude of deviation of the bubble from a predetermined orientation.

According to the present invention there is provided orientation indicating apparatus including a liquid charged chamber having a bubble movable within the chamber as orientation of the chamber is changed, radiation emitting means operable to emit radiation into the chamber, radiation detecting means to detect radiation from the radiation emitting means, and signal comparing means for comparing the values of the radiation signals received by the radiation detecting means, characterised in that said radiation emitting means are operable to emit radiation into the chamber along paths which are located generally along the line of movement of the bubble to impinge substantially on two end edges of the bubble and be reflected laterally from those two end edges, said radiation detecting means are operable to detect radiation reflected laterally from the two end edges at least when the chamber is in a predetermined orientation and to generate respective intensity signals which are variable with movement of the bubble and indicative of the reflected radiation intensity detected from the two end edges when the bubble is in said predetermined position and substantially throughout a continuous range of possible positions of the two end edges of the bubble, and said signal comparing means are operable to receive the two intensity signals and continuously to compare said signals to determine direction and magnitude of deviation of said two end edges from the positions of said two end edges which correspond to said chamber in said predetermined orientation, and so to determine whether the chamber has been moved from said predetermined orientation.

Thus the orientation of a level or other sighting apparatus or member may be determined without the need for direct visual observation by the user.

Preferably the radiation emitting means is operable to emit substantially equal intensity radiation beams into the chamber to impinge on the two end edges of the bubble which are symmetrically located relative to the bubble centre, the radiation detecting means being located relative to the bubble position when the chamber is in said predetermined orientation so as to receive equal intensities of radiation reflecting from said end edges, and wherein said signal comparing means is operable to compare the two intensity signals so as to detect when the signals are balanced.

For a better understanding of the present invention, and to show how the same may be carried into effect, reference will now be made, by way of example, to the accompanying drawings in which:

Figure 1 shows one embodiment of an orientation indicating apparatus according to the invention;

Figure 2 shows a circuit useful for evaluating the frequency of vibrations to which the apparatus of Figure 1 may be subjected;

Figure 3 shows another embodiment of an orientation indicating apparatus according to the invention;

Figure 4 shows the orientation of detector means in relation to the bubble for an apparatus of the invention;

Figure 5 shows another embodiment of the apparatus according to the invention;

Figure 6 shows an embodiment of the invention for providing automatic levelling;

Figure 7 shows a module housing or chamber according to one embodiment of the invention;

Figure 8 shows another module housing according to the invention;

Figure 9 shows one embodiment of an automatic levelling table; and

Figure 10 shows a voltage-to-frequency converter connected to a frequency-to-voltage converter which may be used with the orientation indicating apparatus of the invention.

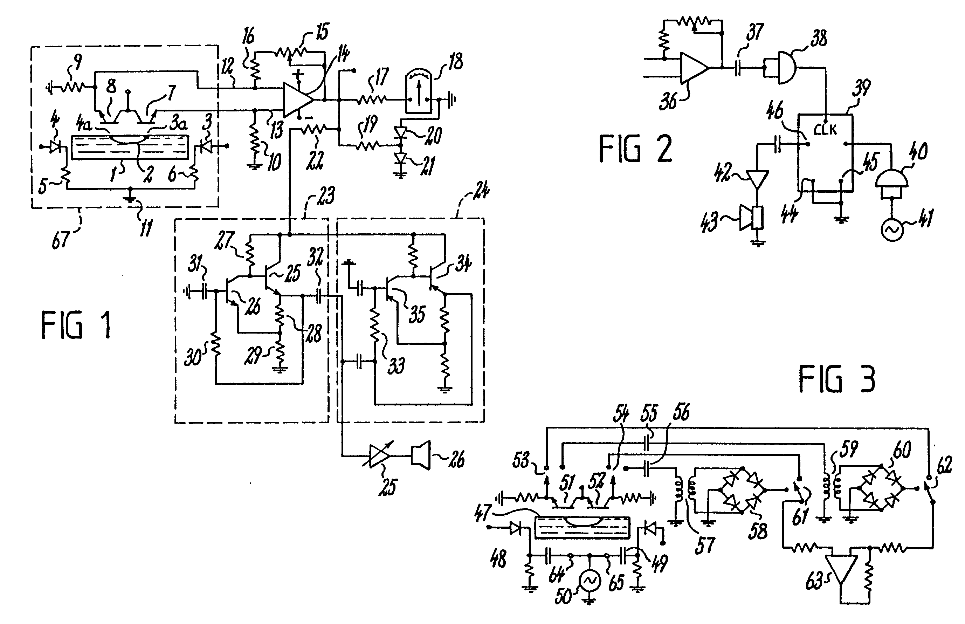

Figure 1 shows a circuit for an orientation apparatus according to an embodiment of the invention. Module unit 67 is associated with indicating means for providing visual and audible indication of the level of the vial 1. The module includes a liquid containing chamber or vial 1 which contains a bubble 2 preferably of air. Light-emitting diodes 3 and 4 which emit infra-red radiation are positioned against the end walls of the vial and emit radiation into these ends along paths which are located generally along the line of movement of the bubble 2 to impinge on bubble edges 3A and 4A. Current limiting resistors 5 and 6 are connected between the cathode electrodes of the diodes and a reference potential. These resistors typically limit the current to I.5 miliamp. Each diode has its anode electrode connected to a supply or positive potential. Two phototransistors 7 and 8 are positioned on one side of the module opposite the bubble. When the bubble is centrally located these phototransistors (which may be MEL12 type) have their collector electrodes connected to a supply of positive potential shown as +V. The emitter electrodes of these transistors are connected via resistors 8 and 10 respectively to a reference potential. As the result of current flowing through the transistors, when radiation impinges upon the base electrodes, this causes a voltage potential to be developed across resistors 9 and 10. These voltage potentials are applied to inputs 12 and 13 of differential amplifier 14. Amplifier 14 has a series combination of resistor 16 and adjusting resistor 15 connected between its output and input terminal 12. Resistors 15 and 16 form a gain adjusting means be an integrated circuit amplifier type 741. The amplifier is connected to positive and negative supply as indicated. The output of amplifier 14 is coupled to differential meter 18 via resistor 17. Meter 18 which reads zero volts at its centre position has a needle which may deflect to the left hand side or the right hand side as a consequence of receiving positive or negative voltage inputs from the amplifier 14. Resistor 19 is coupled between the output of amplifier 14 and to two oppositely poled light emitting diodes 20 and 21. The anode of diode 20 and the cathode of diode 21 are connected to a reference potential. These light emitting diodes are thus connected between the output of amplifier 14 and a reference potential, and as the amplifier provides a positive voltage output light emitting diode 21 will light up. When the amplifier 14 provides a negative voltage output light emitting diode 21 is not energised and light emitting diode 20 lights up. Thus, bubble movement in either the left or right hand direction provides a visual indication on meter 18 and illuminates one or other of light emitting diodes 20 and 21. If desired light emitting diodes 20 and 21 may be of different colours. Meter 18 may also evaluate the electrical difference after amplification of the signals provided by phototransistors 7 and 8 and can, for example give a gradual rising or falling reading before amplification 7 and 8 saturation occurs.

The diodes 20 and 21 and/or the meter 18 may be located remote from the bubble 2 and vial 1 and connected to the latter by cable or radio link.

When the bubble of the vial locates at its central position the inputs of the differential amplifier 14 are balanced and no output is provided by the amplifier. Displacement of the bubble 2 causes the input currents to become imbalanced and, depending upon the amount of displacement and the gain setting of the amplifier 14, the amplifier can be driven into saturation producing a maximum voltage at its output.

A certain amount of elevation of the left hand end of the vial causes the right hand edge of the bubble 2 to move away from the right hand phototransistor 7. This phototransistor receives a decrease in illumination due to the bubble edge 3a moving away therefrom. The left hand phototransistor 8 receives illumination from the left hand bubble edge 4a which is receding therefrom and also from the approaching right hand bubble edge 3a. This provides an imbalance of the electrical currents produced by the phototransistors, thus causing a positive or negative voltage output to be present at the amplifier output, the polarity of the output being indicative of the direction of movement of the bubble 2.

Depending upon the viscosity of the liquid in the vial and the gain setting of the differential amplifier 14, the amplifier 14 may register an output on minute changes of orientation of the module. These changes may not be optically discernible by an operator using the apparatus in a comparable manual exercise. Where the module is subject to vibrations and the bubble edges experience minute rapid fluctuations the period of vibration may be found by connecting the output of the amplifier 14 into a phase comparator 39. The comparator 39 may also be connected to a variable frequency generator 41. By sweeping the generator through a range of frequencies a point in the phase comparator may be reached where the vibrational frequency corresponds to the output of the frequency generator and the output of the comparator will then be indicative of a match between the vibrational frequency and the frequency of the generator.

The output of amplifier 14 is connected via resistor 22 to oscillators 23 and 24. Oscillators 23 and 24 are activated respectively by positive and negative voltages appearing at the amplifier output The outputs of oscillators 23 and 24 are coupled to speaker 26 via audio amplifier 25. Thus, left and right hand bubble movements will produce audible outputs at speaker 26. It is preferred that the oscillators 23 and 24 provide outputs at 600 Hz and 400 Hz respectively. When the output of amplifier 14 swings negative the 400 Hz oscillator may produce an audible signal at the speaker. Thus a 600 Hz sound may be produced when the bubble moves to the left and a 400 Hz sound when it moves to the right. In a modification of this embodiment the frequency of the sound produced at the speaker 26 may be increased incremetally as the bubble 2 moves. Thus a higher or lower frequency sound may be produced as the bubble 2 moves. In this embodiment the visual or audible signals produced which are indicative of bubble movement may be transmitted either by cable radio or other link to a remote monitoring station.

Typical components values for oscillators 23 are as follows:-

Transistors 25 and 26 are NPN transistors, collector resistor 27 may be 10K ohms, resistors 28 and 29 are 1K ohms, resistor 30 is 100K ohms, capacitors 31 and 32 are 0.0l mfd. Oscillator 24 may have identical components to that of oscillator 23 except that the transistors are PNP type and resistor 33 is 200K ohms. Transistors 34 and 35 may be BC178 types. Transistors 25 and 26 may be BC208 types. To evaluate the frequency of vibrations to which the module may be subjected (these vibrations will result in rapid fluctuations of the output provided by amplifier 14) the circuit of Figure 2 may be employed. Amplifier 36 of Figure 2 receives as its inputs the outputs of phototransistors 7 and 8. A series combination of resistors is connected between one of the inputs and the output of amplifier 36. The purpose of these resistors is the same as that of resistors 15 and 16 of Figure 1. The amplifier 36 has its output coupled via capacitor 37 to AND gate 38. Gate 38 has its output coupled to the clock input of flip flop 39. A variable frequency generator 41 is connected via AND gate to the D input of flip flop 39. The Q output of flip flop 39 (terminal 46 in Figure 2) is connected to audioamplifier 42 and speaker 43. The TS terminals 44 and 45 of flip flop 39 are connected to a reference potential. Flip flop 39 acts as a sensitive phase comparator. The frequency of generator 41 until a zero beat is heard at the speaker 43. If desired the Q output 46 of flip flop 39 may be used to energise light emitting diodes or a digital display (not shown) to indicate phase variation.

The circuit shown in Figure 3 employs capacitors 48, 49, 55 and 56. Capacitors 48 and 49 are input capacitors which connect across the light-emitting diodes. One terminal of each capacitor is connected to terminals 64 and 65 of the module and these allow a common frequency source 50 to be connected thereto. Phototransistors 51 and 52 have switches 53 and 54 connected to their emitter electrodes. In one position of these switches the emitter electrodes are connected via capacitors 55 and 56 to the inputs of differential amplifier 63 after passing through transformers 57 and 59.

Transformers 57 and 59 have rectifier bridges 58 and 60 connected to the secondary windings. These bridges convert the alternating current signal of the secondary windings to a DC signal. These DC signals may be applied directly via switches 61 and 62 to the inputs of the amplifier 63. Thus, when the switches in the module are set for AC operation and a common source of frequency is applied to terminals 64 and 65 of the module the AC signal produced by the phototransistors after they receive radiation from the edge of the bubble is coupled to the rectifier bridges via transformers 57 and 59 and then to the differential amplifier.

The transformers 57 and 59 may be made receptive to a certain frequency injected at the module terminals 64 and 65. Different frequency signals may be injected into each of the photodiodes to illuminate the bubble edges, and thus each phototransistor becomes receptive to its own source of illuminating radiation. For example the left hand edge 4a of the bubble 2 may give off radiation modulated by 1KHz frequency whilst the right hand edge 3a may give off a 20KHz frequency whilst the right hand edge 3a may give off a 20KHz modulated radiation. The detecting means provide outputs at these frequencies and these outputs are connected to the flip-flop 39. Such an arrangement provides for very sensitive detection of radiation from the edges of the bubble. The operation of the switches in one of their positions connects the signal provided by the photo-transistors to the inputs of the differential amplifier. It will be evident that this process of frequency rejection causes the detection of the bubble edge to be frequency selective. Thus, the module may be transparent and ambient light will not affect the operation of the apparatus. This arrangement allows the bubble to be seen visually by the operator whilst electronic evaluation is simultaneously carried out. The frequency-selective bubble edge detection is the electrical equivalent of operating the photo-transistors through a light-restricting aperture in the module housing. If the edges of the bubble are illuminated with radiation of different frequencies detection of the bubble edges becomes very selective in operation.

The differential amplifier used in the various embodiments of the invention produces an output only when the edges of the bubble cause different amounts of radiation to be detected by the detecting phototransistors. Changes in bubble size by contraction or expansion due to ambient temperature variations do not produce an output signal at the differential amplifier since such variations in bubble size when the bubble is centrally located affects both phototransistors equally and thus the balanced position is preserved and no difference is detected. This feature provides for temperature immunity of the apparatus.

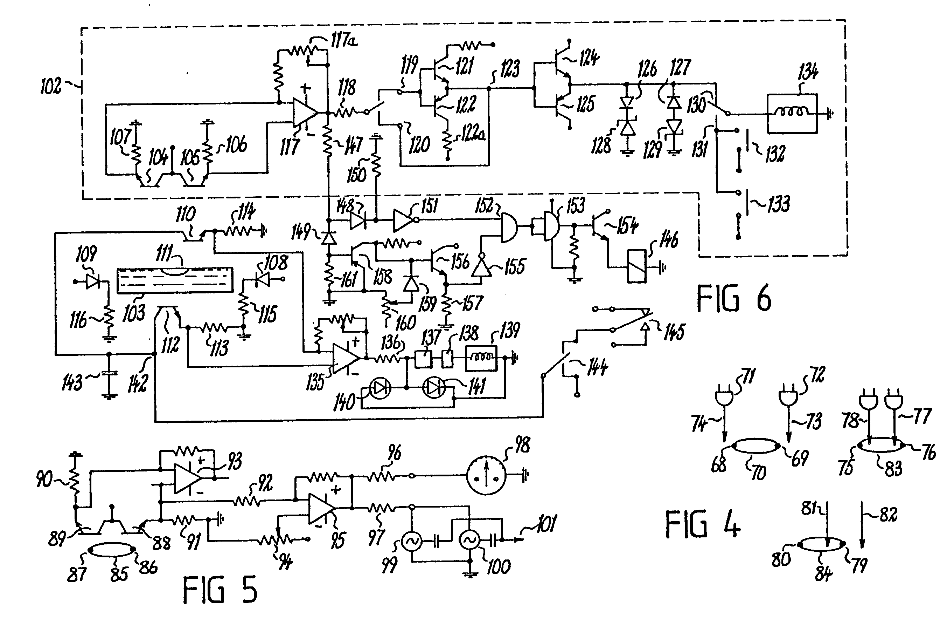

Figure 4 shows what occurs with the apparatus of the invention when the bubble enlarges or contracts due to changes in temperature. The points of maximum illumination 68 and 69 seen on the bubble edge have moved equal distances from the photodetectors 71 and 72, and their planes of maximum detection 73 and 74 respectively are also equally spaced from the edges of the bubble, and thus there is no alteration seen as a difference in radiation detected by the detectors, and hence no output may be registered by the differential amplifier. An enlarged bubble is shown at 83, and in this bubble the maximum points of illumination 75 and 76 have moved outside the planes of detection 77 and 78. Again, however, the original balance is preserved and no output may be present at the output of the differential amplifier. A bubble 84 is shown where a plane of detection 81 is inside the bubble and the other plane 82 is outside. This gives rise to an imbalance condition. The detector at plane 81 receives illumination from points 79 and 80 whilst the detector at plane 82 receives reduced illumination from only one bubble edge 79. Thus an output is produced by the differential amplifier. This situation may be turned to advantage to evaluate temperature from the bubble in Figure 5.

In Figure 5 a temperature evaluation of the bubble is obtained from the detecting means and is used to activate external indicators. The bubble 85 in Figure 5 with its points of maximum illumination at 86 and 87 activate phototransistors 88 and 89 whose outputs are applied to differential amplifier 93. The emitter of detector 88 is coupled via resistor 92 to the input of a second differential amplifier 95. Amplifier 95 is used to evaluate the temperature of the bubble. The other input of amplifier 95 is connected via potentiometer 94 to a source of reference potential. When the bubble is centrally located and the ambient temperature is 20°C the potentiometer may be adjusted until a zero output is produced by amplifier 95. This output is connected via resistor 96 to a meter 98. The other terminal of meter 98 is connected to ground. Meter 98 normally reads zero, and should the bubble expand or contact the difference value from the original potentiometer setting will be read on meter 98 which reading will be indicative of the temperature variation. Amplifier 95 is coupled via resistor 97 to oscillators 99 and 100. The outputs of the oscillators may be arranged for remote connection at 101. As mentioned previously, one of the oscillators may produce a 600 Hz signal whereas the other may produce a 400 Hz signal. By using voltage-controlled oscillators the frequencies at which the oscillators oscillate may vary in accordance with the varying output voltage provided by amplifier 95. Precise evaluation of the temperature at a remote location may be using a frequency-to-voltage converter to enable temperature readings to be obtained.

The use of voltage-controlled oscillators may allow the frequencies of the signals to be gradually varied from a minimum to maximum. Thus, temperatures above and below ambient may be remotely ready by converting these temperature-related frequency signals into a digital signal using a frequency-to-digital converter. Where temperature read-out is of prime importance the liquid in the vial may be chosen so as to be especially temperature sensitive.

It should be appreciated that the position of the bubble within the vial may be located using similar circuit to that described above. For example, the input voltages of the second differential amplifier may be balanced with the variably-connected voltage reference source when the bubble centrally locates and the applied voltage may be read to give a reference reading, and may be re-read after the bubble has moved and thus an indication of the bubble position can be obtained.

Thus the apparatus provides a means for bubble movement and variance of bubble position detection in which detection is independent of bubble enlargement or contraction caused by temperature variations. In the embodiment of Figure 5 the bubble size variation due to temperature may be detected and evaluated, and bubble movement caused by orientation of a member may be indicated simultaneously with or in addition to a temperature evaluation.

Figure 6 shows a circuit for providing operation of automatic levelling motors. The circuit includes logic switching means which allows a second level indication or automatic function to be activated on completion of a first evaluation. The circuit for operation of one levelling motor is shown within dotted outline 102. The vial 103 has light-emitting diodes 108 and 109 positioned at its ends. These diodes emit radiation which impinges on the edges of the bubble within vial 103. One source of maximum illumination impinging on the bubble is shown at 111. Radiation at the edges of the bubble is detected by phototransistors 105 and 104. The outputs from these transistors appear as a voltage potential developed across resistors 106 and 107. These output voltages are coupled to the inputs of differential amplifier 117. Amplifier 117 has gain-adjusting resistances connected in its feedback path between the output and the inverting input shown at 117A. The output of the amplifier is connected via resistor 118 to switch SW1 which is the up position as shown connects the resistor to switch contact 119 and then to the common of switching amplifying transistors 121 and 122. Transistors 121 and 122 are voltage amplifiers which have their operation limited by resistors in their emitter collector conduction paths. These transistors are complementary PNP and NPN transistors with their emitter electrodes connected together at 123. The emitter electrodes of these transistors are connected to the base electrodes ofthe main switching transistors 124 and 125. These transistors in one embodiment of the invention are 2N3055 (NPN) and MJ2955 (PNP) and the transistors 121 and 122 may be 2N4250 (PNP) and 2N3569 (NPN). However, other types of transistors may also be used. The operation of switch SW1 to the down position bypasses the two preliminary switching transistors 121 and 122 thus connecting the amplifier output directly to the base electrodes of the main switching transistors 124 and 125. The collector electrodes of the main switching transistors are directly connected to the positive and negative supply voltages. A voltage protection circuit may be connected between the common connection of the emitter electrodes of transistors 124 and 125 and ground. These protection circuits protect the transistors from back emf produced by the levelling motor 134. The protection circuits comprise diodes 126 and 127 connected in series respectively with zener diodes 128 and 129. The other terminals of the zener diodes are connected to ground. The zener diodes may be chosen to be operative approximately at 4 volts higher than the supply voltage of the positive and negative supply. Thus, peak transients caused by the inductive circuit of the motor 134 are safely bypassed to ground. Switch SW 2 when operated to the down position connects the motor to switches 132 and 133 which in turn are coupled to the negative and positive supply respectively. The operation of these switches causes the motor to operate in either the reverse or forward direction of rotation thus lowering or raising the platform with which the motor may be associated. This circuit provides for automatic control of a sensing or levelling motor for controlling the raising or lowering of a platform.

As the output of the differential amplifier 117 swings positive or negative with respect to ground in synchronism with left and right hand movement of the bubble, the output of the amplifier 117 is connected in series with the motor 134. Thus the output from the amplifier 117 causes the shaft of the motor 134 to rotate in forward or reverse direction as a consequence of left or right hand bubble movement. The motor 134 may be a permanent magnet DC motor which may be suitably attached to a housing containing the module. When the motor 134 is rotating in the forward direction it may with suitable mechanical coupling cause the module to be elevated at its right hand end extremity, and reverse-direction rotation of the motor may cause the module to be depressed or lowered at this extremity. Thus when the bubble is centrally located with the vial in the level condition there is no motor action and the module and the housing will be substantially horizontal. Elevation or lowering of the housing from the level condition causes the motor 134 to operate and to restore the housing to its level condition. Thus the module is automatically maintained in this condition. A modification of this embodiment allows the apparatus of the invention to measure the amount of angular deviation of the module from the horizontal. In this modification the apparatus of the invention is placed upon a member to be measured, the apparatus is provided with a graduated degree scale over which a pointer fixed to the housing may read. Operation of the motor 134 gives a reading on the scale of the elevation or depression of a given reference point.

The three modules may have their outputs connected to three actuating motors as has been described above. Additional circuitry may be connected between the outputs of the differential amplifiers and the motors. This circuitry may include switching means such as triacs and SCR's to operate AC or DC motors for automatic levelling of a member.

In Figure 6 two additional phototransistors 110 and 112 are shown positioned at a location halfway between the top and bottom surfaces of the vial and positioned to receive radiation from the bubble edge as shown at 111. When the bubble is centrally located the phototransistors 110 and 112 receive equal excitation from the bubble edge. These two phototransistors have their emitter resistances 113 and 114 connected to ground. The outputs from these phototransistors are applied to differential amplifier 135, the output of which is connected via resistor 136 to switching means 137. A protection circuit like that described above is shown schematically at 138. The output is connected to sensing motor 139. For visual indication light-emitting diodes 140 and 141 are provided shown connected between resistor 136 and ground. These diodes indicate left and right hand tilting of the vial or bubble position phototransistors 110 and 112 align on the bubble edge 111 only when the vial is in the normal level or central position. To obtain the second level reading at right angles to the length of the vial phototransistors 110 and 112 may be used. However, due to the curvature of the vial it may be preferred to use a second vial for this purpose. In order to provide a sequential order of levelling which may be necessary the following is applicable.

The detection process provided by detectors 110 and 112 is delayed until the vial has been levelled along its length. To provide this facility the following occurs. Diodes 148 and 149 are connected to resistor 147 and to the output of differential amplifier 117. When the amplifier 117 provides a positive voltage output at the junction between diodes 148 and 149 diode 148 conducters and diode 149 remains non-conductive. Thus, a positive voltage is provided at the input to inverting buffer 151. The output from buffer 151 is reflected as logic level 0 at AND gate 152. This gives a logic level 0 output and AND gate 153 and hence transistor 154 becomes non-conducting. When there is a negative voltage at diode 148 it does not conduct and thus there is a low logic level output at inverter 151 and this gives a logic level 1 output at AND gate 152. However, whether or not AND gate 152 conducts also depends upon the gate input tied to inverter 155. A negative voltage applied to diode 159 biases transistor 158 to the condition. This transistor then conducts allowing the balance of the bias voltage at the base of transistor 156 to be positive. Hence, this transistor conducts and presents a positive voltage at the input to inverter 155. This in turn provides a negative voltage at gate 152 making this gate inoperative. Since the differential amplifier cannot present simultaneously positive and negative outputs, only when there is a zero output provided by the amplifier (when the vial is level) can gate 152 become operative. Zero volts at the junction between diodes 148 and 149 allows the input to inverter 151 to be pulled down to ground by resistor 150. This gives a high signal at one terminal of gate 152. A zero voltage signal at the base of transistor 158 allows this transistor to be non-conductive, and this causes the bias potential at the base of transistor 156 to be negative thus providing for non-conduction of this transistor. This allows resistor 157 to ground the input to inverter 155 producing a high signal input at gate 152. Gate 152 becomes operative allowing a positive voltage to reach transistor 154. This transistor conducts and operates relay 146 whose contacts 145 apply a positive voltage at terminal 42 to phototransistors 110 and 112 through switch 144. This allows transistors 110 and 112 to be operative only after the vial has been levelled along its length. When switch 145 is in the down position a positive voltage is applied directly to the phototransistors. The circuit of Figure 6 may be used in a situation where a number of modules are operative and a sequential order of operation is desired. Thus two modules are set at right angles to each other may be sequentially operated to provide for automatic levelling of a table or platform.

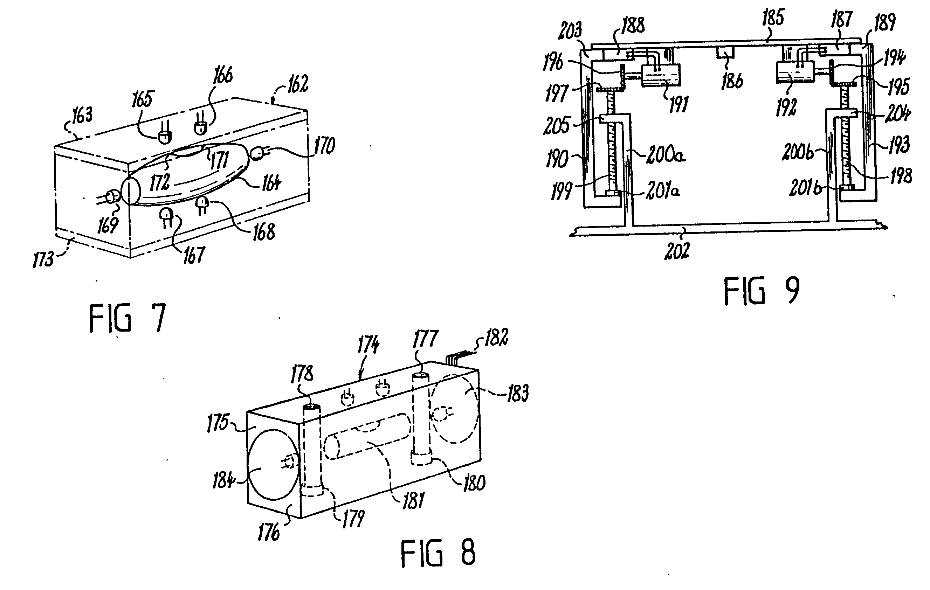

Figure 7 shows a module housing 162 containing a 360° viewing vial 164. A top section 163 containing phototransistors 165 and 166 is illustrated. Light-emitting diodes 169 and 170 are positioned to emit radiation into the vial which radiation impinges on the bubble edges at 171 and 172. Opposite these edges the phototransistors 165 and 166 may be arranged. If the vial is turned upside down the phototransistors will then be positioned at the bottom of the vial at 167 and 168.

Figure 8 shows a module 174 which has a detachable lower section 176 secured to a top section 175. In-built protrusions 183 and 184 allow the bottom section to be keyed into the top section. The sections may be fastened together by bolts 177 and 178 which after insertion into the top section pass through and screw into threaded housings 179 and 180 in the bottom section thereby securing the vial 181 in a light-proof enclosure. The lower section may be removed thus allowing different vials to be interchanged.

In the embodiments of Figures 1 to 8 the 360° vial made of transparent plastics material is provided for use in levelling instruments or other members or apparatus. The vial preferably is contained in an opaque modular housing with the vial being about 4 cms long and 1 cm in diameter with a bubble length of about 12 mm. The vial preferably is formed as a straight tube with an external profile which allows it to be rotated about a horizontal axis without the bubble moving from the central position as mentioned above. The end walls of the vial preferably are flat to allow the light-emitting diodes to be positioned abutting the ends. The vial is preferably mounted in an opaque housing. This housing may, for example, be about 5½ cms long, 1.5 cms wide and 2.5 cms high.

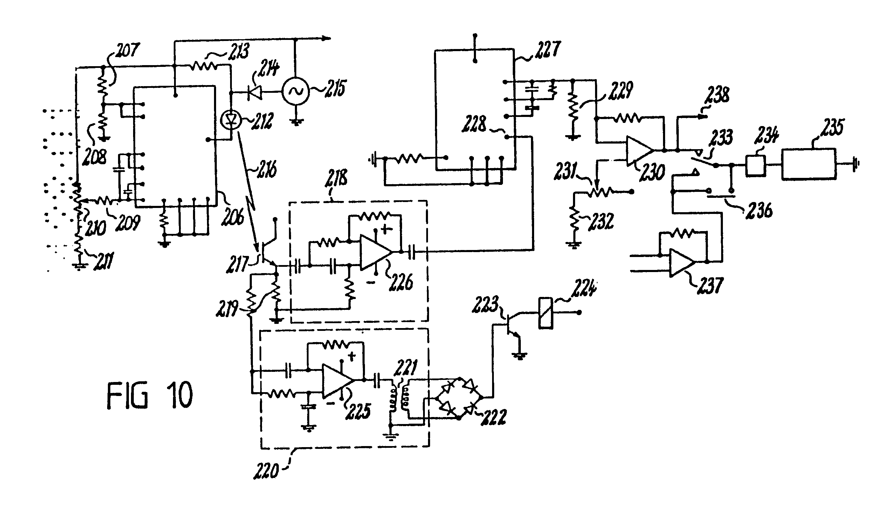

Figure 9 shows an automatic levelling table 185 on which three modules 181, 187 and 188 are mounted. These modules are mounted on the underneath surface of the table and are located at 120° spacings around the circumference of the table. The modules activate three sensing or levelling motors only two of which are shown at 191 and 192. The motors are mounted on the table adjacent to their respective operating modules. An outrigger frame at 189, 193 and 190, 203 provides bearing housings to support screw-threaded elevating shafts 198 and 199. These shafts terminate at one end in gearing members 195 and 197 which engage in a 90° relationship with gearing units contained on the shafts of the motors. The lower end of the elevating shafts are housed in bearings 201a and 201b which in turn are mounted on the outrigger members 190 and 193. The threaded screw housings are shown at 204 and 205. These are attached to the bottom plate member 202 by members 200a and 200b. When the three motors are activated by their respective modules the threaded elevating shafts are rotated in the forward or reverse direction of rotation. This rotation of the motor-driven elevated shafts causes the table top member to be elevated or lowered according to the control exercised by the modules. Thus automatic level control is maintained with respect to the bottom plate of the table. The bottom plate assumes an orientation relative to the surface on which it is placed.

Figure 10 shows a voltage-to-frequency converter 206 (which may be a 9400 type) connected via an infra-red link to a frequency-to-voltage converter of the same type to provide for raising or lowering of an automatic levelling table as previously described. Whilst an infra-red link has been mentioned it should be appreciated that a radio link may also be employed. The converter 206 includes a bias network of resistors 207, 208, 209, 210 and 211. The transmitting light-emitting diode 212 is connected to a frequency pin and to the positive supply via limiting resistor 213. A fixed frequency source 215 also connects via modulating diode 214 to lightemitting diode 212. The frequency source when activated modulates the transmitted light of diode 212. The potentiometer 210 when adjusted causes the converter to originate a certain range of frequencies. However, the lower limit of frequencies is inhibited by resistor 211. The fixed frequency may be 200 Hz or some other convenient frequency. The modulated light is shown linked by light path 216. The receiving phototransistor 217 provides a received signal across emitter resistor 219. This signal is applied to a high-pass filter and amplifier 218 and a low-pass section 220. In the case of the low-pass section the signal is applied via a frequency-sensitive circuit to operational amplifier 225 which has its output connected to a frequency-sensitive transformer 221. The secondary winding of the transformer 221 has adiode rectifier bridge connected across it. The output of the bridge activates transistor 223 which has a relay winding 224 connected between the collector electrode of the transistor and the positive supply. Thus, the low-frequency signal transmitted by the fixed source is rejected by the high-pass section but accepted by the lowpass section. In the low-pass section the signal is amplified, rectified and applied to transistor 223 causing relay 224 to operate.

The frequency signal selected by the operator at the transmitter is accepted at the receiver by the high-pass section 218. It is amplified by amplifier 226 and applied to the input of frequency-to-voltage converter 227. Converter 227 is of the same type as converter 206. The resultant voltage from the received signal is applied by converter 227 to resistor 229. This voltage is applied to one input of differential amplifier 230. The other input of amplifier 230 is connected to motor-driven potentiometer 231. Potentiometer 231 is connected to resistor 232 as shown. The output of amplifier 230 is connected via relay contacts 233 and switching network 234 to motor 235 and then to ground. The differential amplifier which receives the signals from the detecting phototransistors of the module is shown at 237. The motor illustrated may be one of three arranged at 120° spacings on a circumference around the levelling table.

When the transmitter is activated the low frequency continuously e transmitted operates the low-pass section of the receiver thus operating relay 224. The relay contacts operate to disconnect amplifier 237 from the motor 235 and connect the motor to amplifier 237 from the motor 235 and connect the motor to amplifier 230. Manual switch 236 is in the open position and this switch is used to short circuit the relay contacts when remote operation of the motor is not required.

Operation of the potentiometer at the transmitter causes a certain frequency to be transmitted. This is accepted by the high-pass section at the receiver and applied to converter 227. The output of converter 227 is connected via relay contacts to the levelling motor 235. Thus, when the potentiometer reaches a balanced input the poteniometer setting at the receiver end will be found identical to that at the transmitter. Whilst the motor is rotating to achieve this balanced condition it is also raising or lowering the automatic levelling table. The other two levelling motors operate in sympathy with the remote-operated motor and restore the table to a level condition. A full revolution of the potentiometer wiper may correspond to the maximum height of the table. Deactivation of the transmitter restores the levelling table to normal operation. At 238 the output of the remote-controlled amplifier may be connected to apparatus to rotate a member on the levelling table, an operation which may be independent of the levelling table.

The embodiment of Figure 10 is capable of allowing a member to be orientated in a horizontal plane whilst vertical movement of the member is being evaluated. Horizontal rotation of the member when not contributing to change in the vertical attitude may be ignored by the apparatus.

When using a vial to maintain a member at a reference level via adjusting motors the bubble within the module may be increased in length or the vial body shortened to allow the module to provide directional information to the adjusting motors. With the vial at 90° to the horizontal the illuminated bubble may have its edge in the detection area of the right hand phototransistor. Thus directional information and consequent restoring motive forces may be initiated or maintained. When the vial is at 270° to the horizontal the left hand bubble edge is similarly operative thus providing restoring forces as outlined.

The module may include two additional detector means such as phototransistors. These additional phototransistors may be positioned 90° either side of one double edge when the bubble is centrally located.

The additional phototransistors produce an output as a result of illumination from the one bubble edge when the bubble is centrally located. These voltages are applied to a third differential amplifier. Rotation of the module about the horizontal axis causes the third differential amplifier to provide either a positive or negative output indicative of left or right hand rotation of the module respectively. Thus, the module is able to sense vertical rotations in two planes each at 180° to each other. In a further arrangement an input of the differential amplifier may be switched to a resistance across which may be developed a certain voltage potential due to the application of a frequency voltage converter. The converter may be coupled to a radio or infra-red link. The application of a certain range of frequencies from a remote location thus provides excitation for one amplifier input. With a positioning motor connected to the module the module may be orientated from a remote location. This remote operation of the module may be used to advantage in the raising or lowering of a levelling table or the like in which three modules may provide means for automatic levelling.

The chamber of the apparatus of the invention preferably is a liquid-charged chamber with an air bubble contained therein. This air bubble is movable in a longitudinal direction along the length of the chamber. The chamber may be tube-shaped or of any other suitable configuration. When the chamber is tube-shaped and is held horizontally the bubble locates at a central position in the chamber. The chamber or vial may be of the 360° viewing type and may have the transparent liquid chamber suitably contoured on its inner circumference to form a slightly barrelled type configuration. Thus, when the chamber is horizontal and is rotated about its longitudinal axis the bubble occupies the same central location irrespective of the angular degree of rotation.

The radiation emitting means is positioned to emit equal magnitudes of radiation longitudinally into the ends of the chamber in the Figure 1 embodiment so as to impinge on the bubble and create a maximum of radiation intensity detectable at two edges of the bubble.

The radiation detecting means may receive a maximum value of radiation when they are located immediately opposite each bubble edge, and the vial is at its horizontal orientation with the bubble centrally located.

## Claims

1. Orientation indicating apparatus including a liquid charged chamber (1, 47, 103, 164, 181) having a bubble (2, 70, 83, 84, 85, 111) movable within the chamber as orientation of the chamber is changed, radiation emitting means (3, 4, 108, 109, 169, 170, 212) operable to emit radiation into the chamber, radiation detecting means (7, 8, 51 52, 73, 74, 77, 78, 81, 82, 88, 89, 104, 105, 165, 166) to detect radiation from the radiation emitting means, and signal comparing means (14, 36, 63, 117, 230) for comparing the values of the radiation signals received by the radiation detecting means, characterised in that said radiation emitting means (3, 4, 108, 109, 169, 170) are operable to emit radiation into the chamber (1, 47, 103, 164) along paths which are located generally along the line of movement of the bubble (2, 70, 83, 84, 85, 111) to impinge substantially on two end edges (3A, 4A, 68, 69, 75, 76, 79, 80, 86, 87, 171, 172) of the bubble and be reflected laterally from those two end edges (3A, 4A, 68, 69, 75, 76, 79, 80, 86, 87, 171, 172) said radiation detecting means (7, 8, 51, 52, 73, 74, 77, 78, 81, 82, 88, 89, 104, 105, 166) are operable to detect radiation reflected laterally from the two end edges (3A, 4A, 68, 69, 75, 76, 79, 80, 86, 87, 171, 172) at least when the chamber (1, 47, 103, 164, 181) is in a predetermined orientation and to generate respective intensity signals which are variable with movement of the bubble (2, 70, 83, 84, 85, 111) and indicative of the reflected radiation intensity detected from the two end edges (3A, 4A, 68, 69, 75, 76, 79, 80, 86, 87, 171, 172) when the bubble (2, 70, 83, 84, 85, 111) is in said predetermined position and substantially throughout a continuous range of possible positions of the two end edges of the bubble, and said signal comparing means (14, 36, 63, 117, 23) are operable to receive the two intensity signals and continuously to compare said signals to determine direction and magnitude of deviation of said two end edges from the positions of said two end edges (3A, 4A, 68, 69, 75, 76, 79, 80, 86, 87, 171, 172) which correspond to said chamber in said predetermined orientation, and so to determine whether the chamber (1, 47, 103, 164, 181) has been moved from said predetermined orientation.

2. Orientation indicating apparatus as claimed in claim 1 wherein the radiation emitting means (3, 4, 108, 109, 169, 170, 212) is operable to emit substantially equal intensity radiation beams into the chamber (1, 47, 103, 164, 181) to impinge on the two end edges (3A, 4A, 68, 69, 75, 76, 79, 80, 86, 87, 171, 172) of the bubble (2, 70, 83, 84, 85, 111) which are symmetrically located relative to the bubble centre, the radiation detecting means (7, 8, 51, 52, 73, 74, 77, 78, 81, 82, 88, 89, 104, 105, 165, 166) being located relative to the bubble position when the chamber is in said predetermined orientation so as to receive equal intensities of radiation reflecting from said end edges, and wherein said signal comparing means (14, 36, 63, 117, 130) is operable to compare the two intensity signals so as to detect when the signals are balanced.

3. Orientation indicating apparatus as claimed in claim 1 or claim 2, wherein the chamber is an elongated vial (1, 47, 103, 164, 181), said radiation is electromagnetic radiation, and the radiation detecting means (7, 8, 51, 52, 73, 74, 77, 78, 81, 82, 88, 89, 104, 105, 165, 166) is positioned to detect, substantially independent of axial rotation of said vial, radiation reflected from the end edges of the bubble through the vial walls when the chamber is in the predetermined orientation.

4. Orientation indicating apparatus as claimed in claim 3, wherein the opposed ends of the vial (1, 47, 103, 164, 181) through which the radiation is emitted are generally flat and of equal thickness, and wherein the radiation emitting means comprises two identical sources of (3, 4, 108, 109, 169, 170) of electromagnetic radiation, the arrangement being such that the radiation emitted by the two sources are attenuated equally in passing through the ends of the vial (1, 47, 103, 164, 181) and through the liquid before impinging on the bubble (2, 70, 83, 84, 85, 111).

5. Orientation indicating apparatus as claimed in any one of the preceding claims, wherein the radiation detecting means comprises two identical radiation detectors (7, 8, 51, 52, 73, 74, 77, 78, 81, 82, 88, 89, 104, 105, 165, 166) operative to generate equal intensity signals when equal radiation intensities are impinging thereon, and the signal comparing means comprises a differential amplifier (14, 36, 93, 117, 135) receiving one input from each of the detectors so that when the chamber is in the predetermined orientation the detectors receive equal intensities of reflected radiation and the output of the differential amplifier (14, 36, 63, 93, 117, 135) is indicative of the balanced condition.

6. Orientation indicating apparatus as claimed in claim 5, wherein the output of the differential amplifier (14) is applied to two oppositely biased light emitting diodes (20, 21) so that a positive output of the amplifier (14) corresponding to deviation of the chamber (1) in one direction from the predetermined orientation causes illumination of one diode (20, 21) and vice versa.

7. Orientation indicating apparatus as claimed in claim 5 or claim 6, wherein the output of the differential amplifier (14) is applied to a differential current meter (18) operative to provide a continuous indication of variation of the chamber (1) from the predetermined orientation.

8. Orientation indicating apparatus as claimed in any one of claims 5 to 7, wherein the output of the differential amplifier (14) is applied to two audio frequency oscillators (23, 24) operable at different frequencies, one oscillator being operable when the output of the amplifier (14) is negative indicating deviation of the chamber (1) from the predetermined orientation in one direction while the other oscillator is operative upon receiving a positive output signal from the amplifier (14) indicating deviation of the chamber (1) from the predetermined orientation in the other direction, and neither oscillator (23, 24) being operable when the output of the amplifier (14) indicates a balanced condition.

9. Orientation indicating apparatus as claimed in any one of claim 5 to 7, wherein the output of the differential amplifier (14) is applied to a variable frequency audio oscillator (26) operative to provide an audio signal output which is rising or falling in frequency with incremental deviation of the chamber (1) from the predetermined orientation in one direction of the other respectively.

10. Orientation indicating apparatus as claimed in any one of claims 5 to 9, including a further differential amplifier (95) having one input connected to a reference voltage and the other input connected to receive one of said intensity signals, with the reference voltage being chosen so that the further amplifier (95) provides a zero or balances output when the intensity signal applied thereto is of a certain magnitude, and the arrangement being such that variation of said intensity signal applied to the further amplifier (95) due to expansion or contraction for the bubble (85) as a result of changes in the ambient temperature around the chamber will produce a non-zero output of the further amplifier (95) indicative of changes in the chamber ambient temperature.

11. Orientation indicating apparatus as claimed in any one of claims 5 to 10, wherein the output of the differential amplifier (117) is applied to a reversible drive means (134) operatively associated with the chamber (103) so as to restore the chamber (103) to the predetermined orientation upon receiving a non-zero output from said differential amplifier (117).

12. Orientation indicating apparatus as claimed in claim 11, in combination with two further orientation indicating apparatus as claimed in claim 11, with the three apparatus being arranged in association with a member whose orientation with respect to three intersecting axes is to be maintained, and with the chambers of the three indicating apparatus being mounted so that deviations of the member with respect to each respective said predetermined orientation can be detected.

13. Orientation indicating apparatus as claimed in claim 12 wherein the outputs of the differential amplifiers (376, 377, 378) associated with the three apparatus are applied to respective drive means (379, 380, 381) operative to return the member to a predetermined orientation.

14. Orientation indicating apparatus as claimed in any one of the preceding claims wherein the chamber (47) is arranged to allow visual observation of the bubble position thereby enabling visual assessment of the chamber orientation, with the radiation emitting means being operative to emit radiation of a predetermined frequency into the chamber, and with the intensity signals generated by the radiation detecting means (51, 52) being applied to tuned circuit means (57, 58, 59, 60) operative to pass only signals of said predetermined frequency to said signal comparing means (63) whereby incident radiation impinging on the detecting means (51, 52) and not arising from reflection of the radiation emitted by the emitting means will not influence the output of the signal comparing means (63).

15. Orientation indicating apparatus as claimed in any one of the preceding claims, wherein the radiation emitting means (3, 4) is operative to emit radiation of a preselected frequency into the chamber (1), the detected radiation intensity signal being applied to a phase comparator (39) together with a reference signal of said preselected frequency whereby the output of the phase comparator (39) provides an indication of the vibrational frequency of the bubble (2) within the chamber (1).

16. Orientation indicating apparatus as claimed in any one of the preceding claims, wherein the chamber (164, 181) is mounted on a base member (173, 176) and the radiation emitting and detecting means (169, 170, 165, 166) are mounted within a top housing portion (163, 175) which can be assembled with the base member (173, 176) so that the radiation emitting means (169, 179) and radiation detecting means (165, 166) are in the desired positions relative to the chamber (164, 181) thereby allowing interchangability of chambers.

17. Orientation indicating apparatus as claimed in any one of the preceding claims, wherein the chamber (164) has a generally barrel shaped configuration so as to have a concave inner surface uppermost which the bubble travels regardless of the rotational position of the chamber about said longitudinal axis.

18. Orientation indicating apparatus as claimed in any one of claims 5 to 12 or as claimed in any one of claims 14 to 17 as appended directly or indirectly to claim 5, wherein the output of the differential amplifier (36) is applied to a phase comparator (39) to which a variable frequency generator (41) is also connected whereby operating the variable frequency generator (41) at a certain frequency which results in minimization of the output of the phase comparator (39) provides an indication of the vibrational frequency of the bubble (2) within the chamber (1).

19. Orientation indicating apparatus as claimed in claim 3 or as claimed in any one of claims 4 to 18 appended directly or indirectly to claim 3, wherein the vial (1, 47, 103, 164, 181) has a longitudinal dimension selected so that upon rotation of the vial to a position in which one end is generally vertically above the opposite end, the lower bubble edge is located so that reflected radiation from the lower edge impinges on one said radiation detecting means (7, 8, 51, 52, 73, 74, 77, 78, 81, 82, 88, 89, 104, 105, 165, 166) whereby gross deviations of the vial from the predetermined orientation will still enable the signal comparing means (14, 36, 63, 117, 230) to indicate such deviations.

20. Orientation indicating apparatus as claimed in any one of the preceding claims, including a housing (162, 174) having a surface which can be placed against a member whose orientation is to be determined, the chamber (164, 181) being selectively rotatably mounted within the housing (162, 174) whereby upon placement of the surface against the member, the degree of rotation of the chamber (164, 181) required before said predetermined orientation is achieved provides a measure of the inclination of the member.

21. Orientation indicating apparatus as claimed in any one of the preceding claims, including two secondary radiation detecting means located opposing each other with the bubble (2, 70, 83, 84, 85, 111) centrally positioned between the two secondary detecting means when the chamber (1, 47, 103, 164, 181) is in the said predetermined orientation, the arrangement being such that rotation of the chamber about an axis that causes the bubble to move relatively closer to one of the secondary detecting means causes a differential in the intensity of reflected radiation detected by the two secondary detecting means whereby rotation of the chamber about that axis may be detected and indicated.

## Patentansprüche

1. Lageanzeigevorrichtung, mit einer flüssigkeitsgefüllten Kammer (1, 47, 103, 164, 181) mit einer Blase (2, 70, 83, 84, 85, 111), die in der Kammer beweglich ist, wenn die Lage bzw. Ausrichtung der Kammer geändert wird, mit einer Strahlungsaussendeeinrichtung (3, 4, 108, 109, 169, 170, 212), die für das Aussenden von Strahlung in die Kammer betätigbar ist, mit einer Strahlungserfassungseinrichtung (7, 8, 51, 52, 73, 74, 77, 78, 81, 82, 88, 89, 104, 105, 165, 166) für das Erfassen von Strahlung aus der Strahlungsaussendeeinrichtung, und mit einer Signalvergleichseinrichtung (14, 36, 63, 117, 230) für das Vergleichen der Werte der durch die Strahlungserfassungseinrichtung empfangenen Signale, dadurch gekennzeichnet, daß die Strahlungsaussendeeinrichtung (3, 4, 108, 109, 169, 170) Strahlung in die Kammer (1, 47, 103, 164) entlang Wegen aussenden kann, die im wesentlichen entlang der Richtung der Bewegung der Blase (2, 70, 83, 84, 85, 111) angeordnet sind, um im wesentlichen auf zwei Endkanten (3A, 4A, 68, 69, 75, 76, 79, 80, 86, 87, 171, 172) der Blase einzuwirken und seitlich von diesen zwei Endkanten (3A, 4A, 68, 69, 75, 76, 79, 80, 86, 87, 171, 172) reflektiert zu werden, wobei mit der Strahlungserfassungseinrichtung (7, 8, 51, 52, 73, 74, 77, 78, 81, 82, 88, 89, 104, 105, 165, 166) Strahlung erfaßbar ist, die seitlich von den beiden Endkanten (3A, 4A, 68, 69, 75, 76, 79, 80, 86, 87, 171, 172) reflektiert wird, zumindest dann, wenn die Kammer (1, 47, 103, 164, 181) in einer vorgegebenen Ausrichtung bzw. Lage ist, und um entsprechende Intensitätssignale zu erzeugen, die mit der Bewegung der Blase (2, 70, 83, 84, 85, 111) veränderlich sind und die reflektierte und aus den zwei Endkanten (3A, 4A, 68, 69, 75, 76, 79, 80, 86, 87, 171, 172) erfaßte Strahlungsintensität anzeigen, wenn die Blase (2, 70, 83, 84, 85, 111) in der vorgegebenen Position und im wesentlichen innerhalb eines zusammenhängenden Bereiches der möglichen Positionen der beiden Endkanten der Blase ist, und daß die Signalvergleichseinrichtung (14, 36, 63, 117, 23) betätigbar ist, um zwei Intensitätssignale zu empfangen und fortwährend die Signale zu vergleichen, um Richtung und Größe der (Lage-)Abweichungen der beiden Endkanten von den Positionen der beiden Endkanten (3A, 4A, 68, 69, 75, 76, 79, 80, 86, 87, 171, 172) zu bestimmen, die der Kammer in der vorgegebenen Lage entsprechen, und um so zu bestimmen, ob die Kammer (1, 47, 103, 164, 181) aus der vorgegebenen Lage bzw. Ausrichtung bewegt worden ist.

2. Lageanzeigevorrichtung nach Anspruch 1, dadurch gekennzeichnet, daß mit der Strahlungsaussendeeinrichtung (3, 4, 108, 109, 169, 170, 212) Strahlen mit im wesentlichen gleicher Intensität in die Kammer (1, 47, 103, 164, 181) aussendbar sind, um auf die zwei Endkanten (3A, 4A, 68, 69, 75, 76, 79, 80, 86, 87, 171, 172) der Blase (2, 70, 83, 84, 85, 111) einzuwirken, die symmetrisch relativ zu der Mitte der Blase angeordnet sind, daß die Strahlungserfassungseinrichtung (7, 8, 51, 52, 73, 74, 77, 78, 81, 82, 88, 89, 104, 105, 165, 166) relativ zu der Stellung der Blase so angeordnet ist, wenn die Kammer in der vorgegebenen Lage ist, daß gleiche Intensitäten der von den Endkanten reflektierten Strahlung empfangen werden, und daß mit der Signalvergleichseinrichtung (14, 36, 63, 117, 130) die beiden Intensitätssignale vergleichbar sind, um festzustellen, wenn die Signale ausgeglichen sind.

3. Lageanzeigevorrichtung nach Anspruch 1 oder 2, dadurch gekennzeichnet, daß die Kammer eine längliche Ampulle (1, 47, 103, 164, 181) ist, daß die Strahlung elektromagnetische Strahlung ist und daß die Strahlungserfassungseinrichtung (7, 8, 51, 52, 73, 74, 77, 78, 81, 82, 88, 89, 104, 105, 165, 166) so angeordnet ist, daß sie im wesentlichen unabhängig von der axialen Drehung der Ampulle die von den Endkanten der Blase durch die Ampullenwände reflektierte Strahlung erfaßt, wenn die Kammer in der vorgegebenen Lage ist.

4. Lageanzeigevorrichtung nach Anspruch 3, dadurch gekennzeichnet, daß die gegenüberliegenden Enden der Ampulle (1, 47, 103, 164, 181), durch welche die Strahlung ausgesendet wird, im wesentlichen flach und von gleicher Dicke sind und daß die Strahlungsaussendeeinrichtung zwei identische Quellen (3, 4, 108, 109, 169, 170) elektromagnetischer Strahlung aufweist, wobei die Anordnung so getroffen ist, daß die von den zwei Quellen ausgesendete Strahlung in gleicher Weise beim Durchtreten der Enden der Ampulle (1, 47, 103, 164, 181) und durch die Flüssigkeit abgeschweist wird, bevor sie auf die Blase (2, 70, 83, 84, 85, 111) auftrifft.

5. Lageanzeigevorrichtung nach einem der vorhergehenden Ansprüche, dadurch gekennzeichnet, daß die Strahlungserfassungseinrichtung zwei gleiche Strahlungsdetektoren (7, 8, 51, 52, 73, 74, 77, 78, 81, 82, 88, 89, 104, 105, 165, 166) aufweist, mit welchen Signale gleicher Intensität erzeugbar sind, wenn gleiche Strahlungsintensitäten auf die Strahlungsdetektoren einwirken, und daß die Signalvergleichseinrichtung einen Differenzverstärker (14, 36, 93, 117, 135) aufweist, der ein Eingangssignal von jedem der Detektoren derart empfängt, daß, wenn die Kammer in der vorgegebenen Lage ist, die Detektoren gleiche Intensitäten der reflektierten Strahlungen empfangen, und daß der Ausgang des Differenzverstärkers (14, 36, 63, 93, 117, 135) den ausgeglichenen Zustand anzeigt.

6. Lageanzeigevorrichtung nach Anspruch 5, dadurch gekennzeichnet, daß das Ausgangssignal des Differenzverstärkers (14) an zwei entgegengesetzt gepolte LEDs (20, 21) angelegt wird, so daß ein positives Ausgangssignal des Verstärkers (14) entsprechend der Abweichung der Kammer (1) in einer Richtung von der vorgegebenen Lage ein Leuchten einer Diode (20, 21) bewirkt und umgekehrt.

7. Lageanzeigevorrichtung nach Anspruch 5 oder 6, dadurch gekennzeichnet, daß das Ausgangssignal des Differenzverstärkers (14) an einen Differenzstrommesser (18) angelegt wird, der eine kontinuierliche Anzeige der Lageänderung der Kammer (1) von der vorgegebenen Lage schafft.

8. Lageanzeigevorrichtung nach einem der Ansprüche 5 bis 7, dadurch gekennzeichnet, daß das Ausgangssignal des Differenzverstärkers (14) an zwei Tonfrequenzoszillatoren (23, 24) angelegt wird, die bei unterschiedlichen Frequenzen arbeiten, wobei ein Oszillator aktiviert wird, wenn das Ausgangssignal des Verstärkers (14) negativ ist und so eine Lageabweichung der Kammer (1) von der vorgegebenen Lage in einer Richtung anzeigt, während der andere Oszillator aktiviert wird, wenn ein positives Ausgangssignal von dem Verstärker (14) empfangen wird, und eine Lageabweichung der Kammer (1) von der vorgegebenen Lage in die andere Richtung anzeigt, und daß kein Oszillator (23, 24) anspricht, wenn das Ausgangssignal des Verstärkers (14) eine ausgeglichene Lage anzeigt.

9. Lageanzeigevorrichtung nach einem Ansprüche 5 bis 7, dadurch gekennzeichnet, daß das Ausgangssignal des Verstärkers (14) an einen Tonfrequenzoszillator (26) mit variabler Frequenz angelegt wird, mit dem ein Tonausgangssignal erzeugbar ist, dessen Frequenz mit zunehmender Abweichung der Kammer (1) von der vorgegebenen Lage in einer bzw. der anderen Richtung zuoder abnimmt.

10. Lageanzeigevorrichtung nach einem Ansprüche 5 bis 9, dadurch gekennzeichnet, daß ein weiterer Differenzverstärker (95) vorgesehen ist, dessen einer Eingangsanschluß mit einer Referenzspannung verbunden ist und dessen anderer Eingangsanschluß für den Empfang eines der Intensitätssignale angeschlossen ist, wobei die Referenzspannung so gewählt wird, daß der weitere Verstärker (95) ein Null- oder Gleichgewichts-Ausgangssignal erzeugt, wenn das angelegte Intensitätssignal eine bestimmte Größe aufweist, und daß die Anordnung so getroffen ist, daß die Änderung des Intensitätssignals, das an den weiteren Verstärker (95) angelegt ist, infolge der Ausdehnung oder des Zusammenziehens der Blase (85) als Ergebnis von Änderungen der Umgebungstemperatur um die Kammer ein Ausgangssigna lungleich Null des weiteren Verstärkers (95) erzeugt, das Änderungen der Umgebungstemperatur der Kammer anzeigt.

11. Lageanzeigevorrichtung nach einem Ansprüche 5 bis 10, dadurch gekennzeichnet, daß das Ausgangssignal des Differenzverstärkers (117) an eine umkehrbare Antriebsvorrichtung (134) angelegt wird, die der Kammer (103) dergestalt funktional zugeordnet ist, daß die Kammer (103) in die vorgegebene Lage gebracht wird, wenn ein Ausgangssignal ungleich Null aus dem Differenzverstärker (117) empfangen wird.

12. Lageanzeigevorrichtung nach Anspruch 11, in Kombination mit zwei weiteren Lageanzeigevorrichtungen nach Anspruch 11, wobei die drei Vorrichtungen in Zuordnung zu einem Teil angeordnet sind, dessen Lage bezüglich dreier einander schneidender Achsen aufrechterhalten werden muß, und wobei die Kammern der drei Anzeigevorrichtungen so befestigt sind, daß Lageabweichungen des Teils bezüglich der jeweiligen vorgegebenen Lage erfaßt werden können.

13. Lageanzeigevorrichtungen nach Anspruch 12, dadurch gekennzeichnet, daß die Ausgänge der Differenzverstärker (376, 377, 378), die den drei Vorrichtungen zugeordnet sind, je an Antriebsvorrichtungen (379, 380, 381) angeschlossen sind, mit welchen das Teil in eine vorgegebene Lage zurückbringbar ist.

14. Lageanzeigevorrichtung nach einem der vorhergehenden Ansprüche, dadurch gekennzeichnet, daß die Kammer (47) so angeordnet ist, daß eine visuelle Beobachtung der Stellung der Blase ermöglicht ist und dadurch die visuelle Feststellung der Lage der Kammer möglich ist, wobei mit der Strahlungsaussendeeinrichtung Strahlung mit einer vorgegebenen Frequenz in die Kammer einleitbar ist, und wobei die Intensitätssignale, die durch die Strahlungserfassungseinrichtungen (51, 52) erzeugt werden, an abgeglichene Schaltkreiseinrichtungen (57, 58, 59, 60) angelegt werden, mit welchen nur Signale vorgegebener Frequenz zu der Signalvergleichseinrichtung (63) weiterleitbar sind, wodurch einfallende Strahlung, die auf die Erfassungsvorrichtung (51, 52) fällt, und nicht von der Reflexion der von der Aussendevorrichtung ausgesendeten Strahlung stammt, nicht das Ausgangsignal der Signalvergleichseinrichtung (63) beeinflußt.

15. Lageanzeigevorrichtung nach einem der vorhergehenden Ansprüche, dadurch gekennzeichnet, daß mit der Strahlungsaussendeeinrichtung (3, 4) Strahlung einer vorgegebenen Frequenz in die Kammer (1) aussendbar ist, wobei das empfangene Strahlungsintensitätssignal an einen Phasenkomparator (39) zusammen mit einem Referenzsignal der vorgegebenen Frequenz angelegt wird, wodurch das Ausgangssignal des Phasenkomparators (39) eine Anzeige der Vibrationsfrequenz der Blase (2) in der Kammer (1) schafft.

16. Lageanzeigevorrichtung nach einem der vorhergehenden Ansprüche, dadurch gekennzeichnet, daß die Kammer (164, 181) auf einem Basisteil (173, 176) befestigt ist und die Strahlungsaussende- und Erfassungsvorrichtungen (169, 170, 165, 166) in einem oberen Gehäusebereich (163, 175) befestigt sind, der mit dem Basisteil (173, 176) derart zusammengefügt werden kann, daß die Strahlungsaussendeeinrichtung (169, 179) und die Strahlungserfassungseinrichtung (165, 166) in den gewünschten Positionen relativ zu der Kammer (164, 181) sind und dadurch die Austauschbarkeit der Kammern erlaubt ist.

17. Lageanzeigevorrichtung nach einem der vorhergehenden Ansprüche, dadurch gekennzeichnet, daß die Kammer (164) eine im wesentlichen tonnenförmige Ausbildung aufweist, so daß eine konkave innere Oberfläche an höchster Stelle besteht, an welcher die Blase entlangläuft, unabhängig von der Drehposition der Kammer um ihre Längsachse.

18. Lageanzeigevorrichtung nach einem der Ansprüche 5 bis 12 oder nach einem der Ansprüche 14 bis 17, in direkter oder indirekter Rückbeziehung auf Anspruch 5, dadurch gekennzeichnet, daß das Ausgangssignal des Differenzverstärkers (36) an einen Phasenkomparator (39) angelegt wird, an welchen auch ein Generator mit variabler Frequenz (41) angeschlossen ist, wodurch der Betrieb des Generators mit variabler Frequenz (41) bei einer bestimmten Frequenz, bei welcher sich eine Minimierung des Ausgangssignals des Phasenkomparators (39) ergibt, eine Anzeige der Vibrationsfrequenz der Blase (2) in der Kammer (1) schafft.

19. Lageanzeigevorrichtung nach Anspruch 3 oder nach einem der Ansprüche 4 bis 18, in direkter oder indirekter Rückbeziehung auf Anspruch 3, dadurch gekennzeichnet, daß die Ampulle (1, 47, 103, 164, 181) dergestalt ausgewählte Längsabmessungen aufweist, daß bei der Drehung der Ampulle in eine Position, an welcher ein Ende sich im wesentlichen vertikal oberhalb des gegenüberliegenden Endes befindet, die untere Blasenkante so angeordnet ist, daß die reflektierte Strahlung von der unteren Kante auf eine Strahlungserfassungseinrichtung (7, 8, 51, 52, 73, 74, 77, 78, 81, 82, 88, 89, 104, 105, 165, 166) einwirkt, wodurch schwere Lageabweichungen der Ampulle von der vorgegebenen Lage es dennoch ermöglichen, daß die Signalvergleichseinrichtung (14, 36, 63, 117, 230) derartige Abweichungen anzeigt.

20. Lageanzeigevorrichtung nach einem der vorhergehenden Ansprüche, dadurch gekennzeichnet, daß ein Gehäuse (162, 174) mit einer Oberfläche vorgesehen ist, welche gegen ein Teil gehalten werden kann, dessen Lage bestimmt werden soll, daß die Kammer (164, 181) selektiv drehbeweglich in dem Gehäuse (162, 174) gelagert ist, wodurch nach dem Anlegen der Oberfläche gegen das Teil der Grad der Drehung der Kammer (164, 181), der erforderlich ist, bevor die vorgegebene Lage erreicht ist, ein Maß für die Neigung des Teiles schafft.

21. Lageanzeigevorrichtung nach einem der vorhergehenden Ansprüche, dadurch gekennzeichnet, daß zwei sekundäre Strahlungserfassungseinrichtungen vorgesehen sind, die einander gegenüberliegend angeordnet sind, wobei die Blase (2, 70, 83, 84, 85, 111) mittig zwischen den zwei sekundären Erfassungseinrichtungen angeordnet ist, wenn die Kammer (1, 47, 103, 164, 181) in der vorgegebenen Lage ist, wobei die Anordnung so getroffen ist, daß die Drehung der Kammer um eine Achse, die es bewirkt, daß die Blase sich relativ näher zu einer der sekundären Erfassungseinrichtungen bewegt, einen Unterschied in der Intensität der reflektierten Strahlung, die durch die zwei sekundären Erfassungseinrichtungen erfaßt werden, erzeugt, wodurch die Drehung der Kammer um diese Achse erfaßt und angezeigt werden kann.

**Revendications**

1. Appareil indicateur d'orientation comprenant une chambre remplie d'un liquide (1, 47, 103, 164, 181) contenant une bulle (2, 70, 83, 84, 85, 111) mobile dans la chambre quand l'orientation de la chambre est changée, des moyens d'émission de rayonnement (3, 4, 108, 109, 169, 170, 212) ayant pour fonction d'émettre un rayonnement dans la chambre, des moyens de détection de rayonnement (7, 8, 51, 52, 73, 74, 77, 78, 81, 82, 88, 89, 104, 105, 165, 166) pour détecter un rayonnement provenant des moyens d'émission de rayonnement et des moyens de comparaison de signaux (14, 36, 63, 117, 230) pour comparer les valeurs des signaux de rayonnement reçus par les moyens de détection de rayonnement, caractérisé en ce que lesdits moyens d'émission de rayonnement (3, 4, 108, 109, 169, 170) ont pour fonction d'émettre un rayonnement dans la chambre (1, 47, 103, 164) le long de trajets qui sont situés de façon générale le long de la ligne de mouvement de la bulle (2, 70, 83, 84, 85, 111) pour frapper pratiquement les deux bords d'extrémité (3A, 4A, 68, 69, 75, 76, 79, 80, 86, 87, 171, 172) de la bulle et pour étre réfléchis latéralement par ces deux bords d'extrémité (3A, 4A, 68, 69, 75, 76, 79, 80, 86, 87, 171, 172), lesdits moyens de détection de rayonnement (7, 8, 51, 52, 73, 74, 77, 78, 81, 82, 88, 89, 104, 105, 165, 166) ayant pour fonction de détecter un rayonnement réfléchi latéralement par les deux bords d'extrémité (3A, 4A, 68, 69, 75, 76, 79, 80, 86, 87, 171, 172) au moins quand la chambre (1, 47, 103, 164, 181) est dans une orientation prédéterminée et pour produire des signaux d'intensités respectives qui sont variables avec les mouvements de la bulle (2, 70, 83, 84, 85, 111) et indiquant l'intensité du rayonnement réfléchi détectée depuis les deux bords d'extrémité (3A, 4A, 68, 69, 75, 76, 79, 80, 86, 87, 171, 171) quand la bulle (2, 70, 83, 84, 85, 111) se trouve dans ladite position prédéterminée et pratiquement dans une plage continue de positions possibles des deux bords d'extrémité de la bulle et lesdits moyens de comparaison de signaux (14, 36, 63, 117, 23) ayant pour fonction de recevoir les deux signaux d'intensité et de comparer continuellement lesdits signaux pour déterminer le sens et l'amplitude de la déviation desdits deux bords d'extrémité par rapport aux positions desdits deux bords d'extrémité (3A, 4A, 68, 69, 75, 76, 79, 80, 86, 87, 171, 172) qui correspondent à ladite chambre dans ladite orientation prédéterminée et pour déterminer ainsi si la chambre (1, 47, 103, 164, 181) a été déplacée par rapport à ladite orientation prédéterminée.

2. Appareil indicateur d'orientation selon la revendication 1, dans lequel les moyens d'émission de rayonnement (3, 4, 108, 109, 169, 170, 212) ont pour fonction d'émettre des faisceaux de rayonnement d'intensités pratiquement égales dans la chambre (1, 47, 103, 164, 181) pour frapper les deux bords d'extrémité (3A, 4A, 68, 69, 75, 76, 79, 80, 86, 87, 171, 172) de la bulle (2, 70, 83, 84, 85, 111) qui sont situés symétriquement par rapport au centre la bulle, les moyens de détection de rayonnement (7, 8, 51, 52, 73, 74, 77, 78, 81, 82, 88, 89, 104, 105, 165, 166) étant situés par rapport à la position de la bulle quand la chambre se trouve dans ladite orientation prédéterminée de maniére à recevoir des intensités égales de rayonnement réfléchi par lesdits bords d'extrémité et dans lequel lesdits moyens de comparaison de signaux (14, 36, 63, 117, 130) ont pour fonction de comparer les deux signaux d'intensité de maniére à détecter si les signaux sont équilibrés.

3. Appareil indicateur d'orientation selon la revendication 1 ou la revendication 2, dans lequel la chambre est un récipient allongé (1, 47, 103, 164, 181), ledit rayonnement étant un rayonnement électromagnétique et les moyens de détection de rayonnement (7, 8, 51, 52, 73, 74, 77, 78, 81, 82, 88, 89, 104, 105, 165, 166) étant positionnés pour détecter, pratiquement indépendamment de la rotation axiale dudit récipient, un rayonnement réfléchi par les bords d'extrémité de la bulle à travers les parois du récipient quand la chambre se trouve dans la position prédéterminée.

4. Appareil indicateur d'orientation selon la revendication 3, dans lequel les extrémités opposées du récipient (1, 47, 103, 164, 181) à travers lesquelles le rayonnement est émis ont une forme générale plane et une épaisseur égale et dans lequel les moyens d'émission de rayonnement comprennent deux sources identiques (3, 4, 108, 109, 169, 170) de rayonnement électromagnétique, la disposition étant telle que le rayonnement émis par les deux sources est atténué de manière égale en passant à travers les extrémités du récipient (1, 47, 103, 164, 181) et à travers le liquide avant de frapper la bulle (2, 70, 83, 84, 85, 111).

5. Appareil indicateur d'orientation selon l'une quelconque des revendications précédentes, dans lequel les moyens de détection de rayonnement comprennent un deux détecteurs de rayonnement identiques (7, 8, 51, 52, 73, 74, 77, 78, 81, 82, 88, 89, 104, 105, 165, 166) ayant pour fonction de produire des signaux d'intensités égales quand des intensités égales de rayonnement les frappent et les moyens de comparaison de signaux comprennent un amplificateur différentiel (14, 36, 93, 117, 135) recevant une entrée de chacun des détecteurs de manière que si la chambre se trouve dans l'orientation prédéterminée, les détecteurs reçoivent des intensités égales de rayonnement réfléchi et que la sortie de l'amplificateur différentiel (14, 36, 63, 93, 117, 135) indique la condition d'équilibre.

6. Appareil indicateur d'orientation selon la revendication 5, dans lequel la sortie de l'amplificateur différentiel (14) est appliquée à deux diodes électroluminescentes (20, 21) polarisées en opposition de manière qu'une sortie positive de l'amplificateur (14) correspondant à une déviation de la chambre (1) dans une direction par rapport à l'orientation prédéterminée entraîne l'illumination d'une diode (20, 21) et réciproquement.

7. Appareil indicateur d'orientation selon la revendication 5 ou la revendication 6, dans lequel la sortie de l'amplificateur différentiel (14) est appliquée à un appareil de mesure de courant différentiel (18) ayant pour fonction de produire une indication continue de la variation de la chambre (1) par rapport à l'orientation prédéterminée.

8. Appareil indicateur d'orientation selon l'une quelconque des revendications 5 à 7, dans lequel la sortie de l'amplificateur différentiel (14) est appliquée à deux oscillateurs de fréquence audible (23, 24) fonctionnant à des fréquences différentes, un oscillateur fonctionnant quand la sortie de l'amplificateur (14) est négative, indiquant une déviation de la chambre (1) dans une direction à partir de l'orientation prédéterminée tandis que l'autre oscillateur fonctionne à la réception d'un signal de sortie positif de l'amplificateur (14) indiquant une déviation de la chambre (1) dans l'autre direction à partir de l'orientation prédéterminée et aucun des oscillateurs (23, 24) ne fonctionnant quand la sortie de l'amplificateur (14) indique une condition d'équilibre.

9. Appareil indicateur d'orientation selon l'une quelconque des revendications 5 à 7, dans lequel la sortie de l'amplificateur différentiel (14) est appliquée à un oscillateur audible à fréquence variable (26) ayant pour fonction de produire un signal audible de sortie qui augmente ou diminue en fréquence avec une déviation par incréments de la chambre (1) à partir d'une orientation prédéterminée dans une direction ou l'autre respectivement.

10. Appareil indicateur d'orientation selon l'une quelconque des revendications 5 à 9, comprenant un autre amplificateur différentiel (95) dont une entrée est connectée à une tension de référence et dont l'autre entrée est connectée pour recevoir l'un desdits signaux d'intensité, la tension de référence étant choisie de maniére que l'autre amplificateur (95) produise une sortie zéro ou équilibrée quand le signal d'intensité qui lui est appliqué a une certaine amplitude et la disposition étant telle que la variation dudit signal d'intensité appliqué à l'autre amplificateur (95) sous l'effet de la dilatation ou la contraction de la bulle (85) sous l'effet de changements de la température ambiante autour de la chambre produise une sortie non nulle de l'autre amplificateur (95) indiquant des changements de la température ambiante dans la chambre.

11. Appareil indicateur d'orientation selon l'une quelconque des revendications 5 à 10, dans lequel la sortie de l'amplificateur différentiel (117) est appliquée à un dispositif d'attaque réversible (134) associé en fonctionnement avec la chambre (103) de maniére à ramener la chambre (103) dans l'orientation prédéterminée à la réception d'une sortie non nulle dudit amplificateur différentiel (117).

12. Appareil indicateur d'orientation selon la revendication 11, en combinaison avec deux autres appareils indicateurs d'orientation selon la revendication 11, avec les trois appareils agencés en association avec un élément dont l'orientation par rapport à trois axes d'intersection doit être maintenue et avec les chambres des trois appareils indicateurs étant montées de maniére que les déviations de l'élément par rapport à chaque orientation prédéterminée respective puissent être dètectèes.

13. Appareil indicateur d'orientation selon la revendication 12, dans lequel les sorties des amplificateurs différentiels (376, 377, 378) associés avec les trois appareils sont appliquées à des dispositifs d'entraînement respectif (379, 380, 381) ayant pour fonction de ramener l'élément à une orientation prédéterminée.

14. Appareil indicateur d'orientation selon l'une quelconque des revendications précédentes, dans lequel la chambre (47) est agencée pour permettre une observation visuelle de la position de la bulle, permettant ainsi une détermination visuelle de l'orientation de la chambre, les moyens d'émission de rayonnement ayant pour fonction d'émettre un rayonnement à une fréquence prédéterminée dans la chambre et les signaux d'intensité produits par les moyens de détection de rayonnement (51, 52) étant appliqués à des moyens de circuits accordés (57, 58, 59, 60) ayant pour fonction de ne laisser passer que des signaux de ladite fréquence prédéterminée vers lesdits moyens de comparaison de signaux (63) de manière qu'un rayonnement incident frappant les moyens de détection (51, 52) et ne résultant pas de la réflexion du rayonnement émis par les moyens d'émission n'influence pas la sortie des moyens de comparaison des signaux (63).

15. Appareil indicateur d'orientation selon l'une quelconque des revendications précédentes, dans lequel les moyens d'émission de rayonnement (3, 4) ont pour fonction d'émettre un rayonnement d'une fréquence prédéterminée dans la chambre (1), le signal d'intensité de rayonnement détecté étant appliqué à un comparateur de phase (39) avec un signal de référence de ladite fréquence prédéterminée de maniére que la sortie du comparateur de phase (39) donne une indication sur la fréquence de vibration de la bulle (2) dans la chambre (1).

16. Appareil indicateur d'orientation selon l'une quelconque des revendications précédentes, dans lequel la chambre (164, 181) est montée sur une piéce de base (173, 176) et les moyens d'émission et de détection de rayonnement (169, 170, 165, 168) sont montés dans une partie de boîtier supérieure (163, 175) qui peut être assemblée avec la pièce de base (173, 176) de maniére que les moyens d'émission de rayonnement (169, 179) et les moyens de détection de rayonnement (165, 166) soient dans les positions voulues par rapport à la chambre (164, 181) permettant ainsi une interchangabilité des chambres.

17. Appareil indicateur d'orientation selon l'une quelconque des revendications précédentes, dans lequel la chambre (164) a une configuration en forme générale de tonneau de maniére à comporter une surface intérieure concave au sommet de laquelle la bulle se propage indépendamment de la position angulaire de la chambre autour dudit axe longitudinal.

18. Appareil indicateur d'orientation selon l'une quelconque des revendications 5 à 12 ou selon l'une quelconque des revendications 14 à 17, reliée directement ou indirectement à la revendication 5, dans lequel la sortie de l'amplificateur différentiel (36) est appliquée à un comparateur de phase (39) auquel un générateur de fréquence variable (41) est également connecté, de manière à faire fonctionner le générateur à fréquence variable (41) à une certaine fréquence avec pour résultat que la réduction au minimum de la sortie du comparateur de phase (39) donne une indication sur la fréquence de vibration de la bulle (2) dans la chambre (1).

19. Appareil indicateur d'orientation selon la revendication 3 ou selon l'une quelconque des revendications 4 à 18, associée directement ou indirectement à la revendication 3, dans lequel le récipient (1, 47, 103, 164, 181) a une dimension longitudinale choisie de manière que sous l'effet d'une rotation de récipient jusqu'à une position dans laquelle une extrémité se trouve généralement verticalement au-dessus de l'extrémité opposée, le bord inférieur de la bulle se trouve de maniére que le rayonnement réfléchi par le bord inférieur rencontre l'un desdits moyens de détection de rayonnement (7, 8, 51, 52, 73, 74, 77, 78,

81, 82, 88, 89, 104, 105, 165, 166) de maniére que de grands écarts du récipient par rapport à l'orientation prédéterminée permettent encore que les moyens de comparaison des signaux (14, 36, 63, 117, 230) indiquent ces déviations.

20. Appareil indicateur d'orientation selon l'une quelconque des revendications précédentes, comportant un boîtier (162, 174) avec une surface qui peut étre placée contre un élément dont l'orientation doit être déterminée, la chambre (164, 181) étant montée de manière à pouvoir tourner sélectivement dans le boîtier (162, 174) de manière qu'au positionnement de la surface contre l'élément, le degré de rotation de la chambre (164, 181) nécessaire avant que ladite orientation prédéterminée soit atteint, fournit une mesure de l'inclinaison de l'élément.

21. Appareil indicateur d'orientation selon l'une quelconque des revendications précédentes, comprenant deux moyens de détection de rayonnement secondaires situés à l'opposé l'un de l'autre avec la bulle (2, 70, 83, 84, 85, 111) positionnée au centre entre les deux moyens de détection secondaires, quand la chambre (1, 47, 103, 164, 181) se trouve dans ladite orientation prédéterminée, la disposition étant telle qu'une rotation de la chambre autour d'un axe qui provoque un mouvement de la bulle relativement plus prés de l'un des moyens de détection secondaires entraîne une différence d'intensité du rayonnement réfléchi détecté par les deux moyens de détection secondaires, afin qu'une rotation de la chambre autour de l'axe puisse être détectée et indiquée.

FIG 1

FIG 2

FIG 3

1

FIG 6

FIG 4

FIG 5

EP 0 130 738 B1

FIG 7

FIG 8

FIG 9

EP 0 130 738 B1

FIG 10

EP 0 130 738 B1